# EUROPEAN PATENT SPECIFICATION

(11) **EP 3 467 444 B1**
(45) Date of publication and mention of the grant of the patent: **28.07.2021**
(21) Application number: 18198743.9
(22) Date of filing: 04.10.2018
(51) Int. Cl.: G01D 11/24, G12B 9/04, G08B 13/196

(54) **WATERTIGHTNESS OF SENSORS**
WASSERDICHTIGKEIT VON SENSOREN
ÉTANCHÉITÉ DE CAPTEURS

(30) Priority: 04.10.2017 BE 201705711
(43) Date of publication of application: 10.04.2019
(73) Proprietor: Niko NV, 9100 Sint-Niklaas (BE)
(72) Inventor: DE VOS, Pieter, 8000 Brugge (BE); VERHEULE, Gert, 2620 Hemiksem (BE)
(74) Representative: DenK iP bv

(56) References cited:
- EP-A2- 2 144 779
- WO-A1-00/39533
- DE-U1-202014 103 822
- US-A- 4 196 623
- US-A1- 2016 299 582

## Description

### Field of the invention

The present invention relates to the field of fluid-tight packaging of electronic parts, and particularly it relates to the field of watertight packaging of sensors that need to be shielded from e.g. water.

### Background of the invention

Moisture-free packaging for sensitive electronics parts is an important safety and durability aspect for electronic consumer products in humid or wet environments. Rain and ambient light sensors in automotive electronics, outdoor surveillance cameras, indoors and outdoors motion detectors in alarm systems and room light control systems adapted for humid environments, such as humid climate areas, bathrooms, etc., are further examples still requiring an appropriate protection of the sensory devices against moisture as moisture forming on top or within the sensory devices not only reduces their expected lifetime significantly due to corrosion, but also presents an actual safety risk for the customer as short circuits may arise that lead to undesirable discharges or cause fire.

One way to ensure watertightness of a buoyant alarm device is described in the U.S. patent US4644328A (Edward Szymansky [US] et al.) 17 February 1987 (1987-02-17). This application discloses an electronic circuit enclosed in a moisture-free chamber that is formed by joining two parts of an enclosure and inserting a gasket into the so formed joint section. However, this solution needs a suitable ring-shaped gasket, e.g. an O-ring, and therefore it is preferable to have a packaging solution that does not require such extra sealing parts thereby reducing costs and reducing the risk of losing those parts in cases where the device is opened for replacing one or more parts contained therein, e.g. replacing a battery powering the sensor electronics.

Document EP 2 144 779 A2 discloses a packaged sensor for automobile applications including a housing and a cover which cooperate in a way and are made from materials such that effective protection against water and outside contaminants is obtained.

Document US 2016/299582 A1 discloses an information input and output device including a casing with an annulus sidewall. An outer ring is disposed on a first stepped part of the annulus sidewall and a protection cover in a second stepped part of the inner wall of the casing thus providing water tightness.

Document DE 20 2014 103822 U1 discloses a housing for an optical sensor which can be used in the food industry. In order to prevent contamination of the sensor, it is enclosed by a housing including a chamfered end and a cap including a lip. The chamfer and the lip are angled over the longitudinal axis of the sensor, and the angles are different so the chamfer presses and deforms the angled lip, thereby providing water tightness.

Document US 4 196 623 A discloses a portable device which is regulable for measuring the pressure under water. The device includes a threaded casing shell and casing part with a screen to allow viewing the measurement. The threaded parts allow closing the capsule providing a water tight device.

Document WO 00/39533 discloses a water tight measurement device for outdoor applications, including one or more sealing rings.

### Summary of the invention

It is an object of embodiments of the present invention to provide a watertight sensor assembly without any extra sealing parts.

The above objective is accomplished by a device according to the present invention.

The present invention relates to a sensor assembly as claimed in the appended claim 1.

The contact area between the first segment and the second segment may extend along an inner side of the encircling wall facing towards the sensor, or the opposite side of the inner side of the encircling wall facing the sensor.

The sealing region between the first member and the cover member may be a gasket-free sealing region.

The first segment and the second segment may have at least partly slanted surfaces and are positioned slightly overlapping so as to increase the contact when the first segment and the second segment are positioned adjacent each other when mounting the cover member on the first member.

The cover member may act as a lens.

The cover member acting as a lens may be one of a flat lens, a Fresnel lens, a convex lens or a hemispherical lens.

The sensor assembly further may comprise a casing member that supports the cover member in at least a closed configuration of the sensor assembly.

The sensor assembly may further comprise a housing member adapted for being attached to the side of the first member opposite to the side that is facing the cover member in a closed configuration of the sensor assembly.

The sensor assembly may further comprise wire connections to the sensor and in which the housing member is configured in such a way that it encloses and protects at least these wire connections in a closed configuration of the sensor assembly.

The sensor assembly may be wall-mounted during use of the sensor assembly such that the housing member is not visible to the user.

One or more members may be integrally made from polymer plastics.

The sensor assembly may further comprise adjusting means for adjusting the sensor orientation during installation.

The sensor assembly may further comprise a protecting foil which covers the sensor and which prevents direct contacting of the sensor from the side of the first member which is facing the cover member in a closed configuration of the sensor assembly.

The sensor assembly may further comprise locking means for holding two or more members of the sensor assembly in a fixed position relative to each other in a closed configuration of the sensor assembly, such that the tight fit is permanently maintained in that closed configuration of the sensor assembly.

The locking means may comprise at least a bayonet mount.

At least one of the segments which are in contact with each other so as to form the region of tight fit in a closed configuration of the sensor assembly comprises at least a partially sloped edge.

The sensor assembly may comprise a coupling means for coupling the at least one sensor to the first member via a sensor carrier.

The sensor assembly may further comprise means for communicating with an external processing unit.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
Fig. 1 is a perspective view of a flat lens sensor assembly comprising two engaging members in an open configuration, according to an embodiment of the present invention.
Fig. 2 is a perspective view of the same flat lensed sensor assembly as Fig. 1 in a closed configuration.
Fig. 3 illustrates a cross-sectional view of a watertight sensor assembly comprising a first member and a flat lens cover member, according to Figs. 1 and 2.
Fig. 4 is a perspective view of a sensor assembly with hemispherical lens comprising two engaging members in an open configuration, according to an embodiment of the present invention.
Fig. 5 is a perspective view of the same sensor assembly with hemispherical lens as Fig. 4 in a closed configuration.
Fig. 6 shows a cross-sectional view of a watertight sensor assembly comprising a first member and a hemispherical lens cover member, according to Figs. 4 and 5.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a sensor assembly that is watertight. It comprises a first member, at least one sensor positioned in or on the first member, and a cover member for covering the at least one sensor. The first member comprises at least a base portion and a first segment forming a encircling wall for the at least one sensor. The first segment does not need to be ring-shaped but passes completely around the sensor. For example the first segment may also be square shaped, oval shaped, rectangular shaped, etc. In other words, any closed shape that passes completely around the sensor may be used. The cover member comprises at least a top portion and a second segment. Both segments include a bounding surface, extending substantially perpendicular to the base portion and from the top portion. The first segment and the second segment are adapted in shape and/or position so that, when the cover member is mounted to the first member, the first segment and the second segment are positioned adjacent and in contact with each other to form a sealing region between the first member and the cover member based on a tight fit in the contact area between the first segment and the second segment. More specifically, the first segment and second segments form a sealing region based on the tight fit of the respective bounding surfaces, which are in physical contact in the contact area.

Features and advantages of embodiments of the present invention will now be further illustrated with reference to the drawings, illustrating exemplary embodiments.

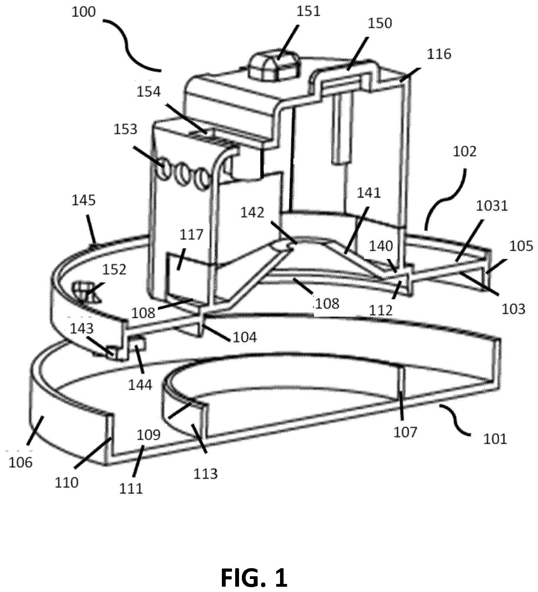

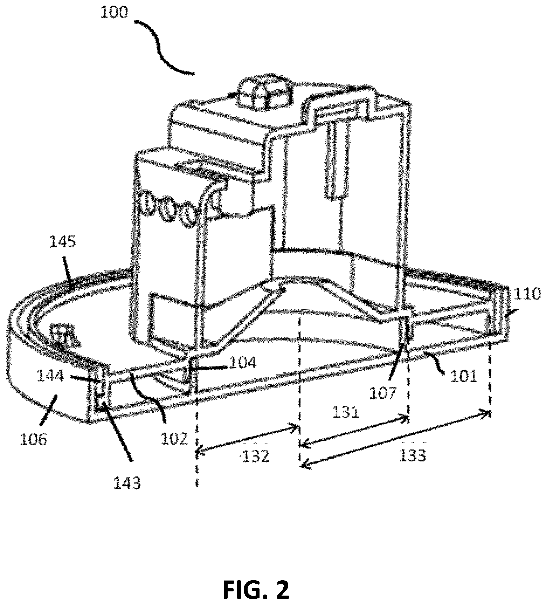

Reference is made to Fig. 1 and Fig. 2 showing a perspective view of an exemplary flat lens sensor assembly 100 according to an embodiment of the invention, the sensor assembly 100 comprising at least two separate, engaging members, i.e. a cover member 101 and a first member 102, in an open and closed configuration, respectively. The two members 101, 102 are configured to be press fitted to each other in a closed configuration. A first member 102, which is preferably formed as an integral part, comprises a substantially flat lower surface 103 and flat upper surface 1031, the substantially flat lower 103 and upper surfaces 1031 being parallel to each other. A principal plane of the member 102 is defined by the substantially flat surfaces 103, 1031. The first member 102 further comprises a first segment 104 a portion of which is projecting downward from the lower surface 103 and in a direction transverse to the principle plane, and another portion of which is projecting upward from the upper surface 1031 and also in a direction transverse to the principle plane. The first segment 104 is, in the present example, positioned at a first radial position 131 and is supporting a shoulder segment 140 connected thereto at its upper portion. The shoulder segment 140 may be flat and is directed towards the center of the first member 102. A support structure 117 for a housing 116 is protruding in an upward direction from the shoulder segment 140. At an inner circumferential edge the shoulder segment 140 is connected to an upward elevating truncated cone segment 141 which comprises a circular opening 142 at its top surface. The sensor assembly 100 may comprise a sensor, which may be an electronic circuit, e.g. an electronic circuit comprising one or more light cells, may be attached to a carrier, e.g. by bonding or gluing. A common carrier for electronic sensors may be a printed circuit board. According to preferred embodiments of the invention, the carrier carrying the sensor is itself attached to an integrally formed member, e.g. by gluing it or by use of fastening means, e.g. screws, preferably close to or on its center location. In such a preferred embodiment, the member to which the sensor carrier may be attached is the first member 102 and comprises a circular opening 142 at its center location that engages the sensor carrier. Alternatively, it is possible to provide for a member of the sensor assembly 100 that also functions as a carrier for the sensor electronics. For such a case no specific sensor carrier needs to be provided, thus saving costs related to extra pieces. According to the present embodiment of the invention the sensor carrier carrying the sensor (not shown) is placed inside this opening 142 and secured to the top surface of the truncated cone segment 141 by suitable securing means. In a particular embodiment, the securing means may be adjusting screws which have the advantage that the user or installer is able to optimize the sensor orientation during installation of the sensor assembly 100 for an optimal response to a radiation signal, for optimal field of view, etc. Thus during installation it may be necessary to energize the sensor or the sensor carrier and having the cover member 101 removed at the same time in order to access and adjust the sensor or the sensor carrier. For enhanced safety with regard to the installer it may be advantageous in embodiments of the invention to provide a thin plastic foil covering at least the opening 142 and the energized sensor or sensor carrier therein. A housing 116 is connected to the support structure 117 of the first member 102. This housing 116 typically protects wire connections extending from an external electrical power supply to the sensor or sensor carrier, communication wires or interfaces that enable communication between the sensor assembly 100 and a remote processing unit, etc., and is usually not visible to the user after a wall-mounted installation. The first member 102 further comprises a second annular segment 105, a portion of which is projecting downward from the lower surface 103 and in a direction transverse to the principle plane, and another portion of which is projecting upward from the upper surface 1031 and also in a direction transverse to the principle plane. The second annular segment 105 is positioned at a second radial position 133 greater than the first radial position 131 of the first segment 104.

According to a preferred embodiment of the invention, the cover member 101 is also formed as an integral part, e.g. as a polymer plastic part by injection molding. Furthermore, at least a portion of the cover member 101 opposite to the opening 142 comprising the sensor is typically made from a transparent material so as to enable the detection of optical radiation signals if the sensor assembly 100 is in a closed configuration as shown in Fig. 2. Additionally the transparent portion of the cover member 101 may, according to the present embodiment, act as a flat lens thereby concentrating radiation signals incident on the sensor which increases its detection signal. According to a preferred embodiment of the invention, the flat lens is provided as a Fresnel lens, e.g. by patterning an upper, substantially flat, inner surface 111 or its corresponding outer surface in such a way that the patterned height profile shows the characteristic diffractive behavior of a collimating lens, e.g. a collimating, positive lens with a 10 m focal length. The cover member 101 comprises a second segment 107 protruding from, in the present example, its upper, inner, substantially flat surface 111 at a third radial position 132 such that within very small tolerances the third radial position 132 is defined as the negative sum of the first radial position 131 of the first segment 104 of the first member 102 and its wall thickness, and such that in a closed configuration of the sensor assembly 100 at least a portion of a bounding surface 112 of the first segment 104 of the first member 102 and a portion of a bounding surface 113 of the second segment 107 of the cover member 101 are in contact with each other. Hence, a watertight sealing is formed by a tight fit of the two contacting surfaces 112, 113 whenever the sensor assembly 100 is brought into a closed configuration, as demonstrated in Fig. 2, in which the upper edge 109 of the second segment 107 of the cover member 101 is contacting and supporting a fraction of the lower surface of the shoulder segment 140 of the first member 102. The downward depending portion of the first segment 104 of the first member 102 is chosen short enough to not touch the upper, inner surface 111 of the cover member 101. Portions 105 and 110, may be positioned at a radial position 133 such that these portions encloses the first and second segments entirely and in such a way that the first member 102 is in contact with the cover member 101 if the two members 101, 102 are properly joined into a closed configuration.

In particular embodiments of the invention, the upper edges 108, 109 of the first segment 104 of the first member 102 and the second segment 107 of the cover member 101, respectively, may comprise a partially sloped edge, e.g. a bevel or chamfer, which reduces the risk of material failure upon the application of stress, e.g. upon joining the two members 101, 102. Typical slope angles of the edges are ranging from 15° to 50°, preferably in the range from 25° to 45°.

In the drawings, also parts 150, 151 of the cable fixation are shown, as well as a mounting hole 152, a wire entrance 153 and a button to release the wires 154.

In embodiments of the invention, the integrally formed first member 102 may be made from plastic material, e.g. PVC. A common manufacturing technology for this may be plastic injection molding, although embodiments are not limited thereto. The first member 102 comprises a base portion, e.g. a flat surface 103 defining a principal plane of the member, and further comprises a first, e.g. upstanding, segment 104 encircling the sensor. The first sensor may be projecting in a transverse direction from the base portion and surrounding a center portion of the first member 102 close to which the sensor carrier is located. In some embodiments, the first member 102 further comprises another portion 105 projecting in a transverse direction from the base portion. The outer surface of the other portion 105 may coincide with a portion of the outer surface 106 of the sensor assembly 100. According to a preferred embodiment of the invention, the cover member 101 is also formed as an integral part and may also be made from plastic material, e.g. from PVC, by a suitable manufacturing process, e.g. injection molding. According to embodiments of the invention, the cover member 101 comprises at least a top portion and a second segment 107.

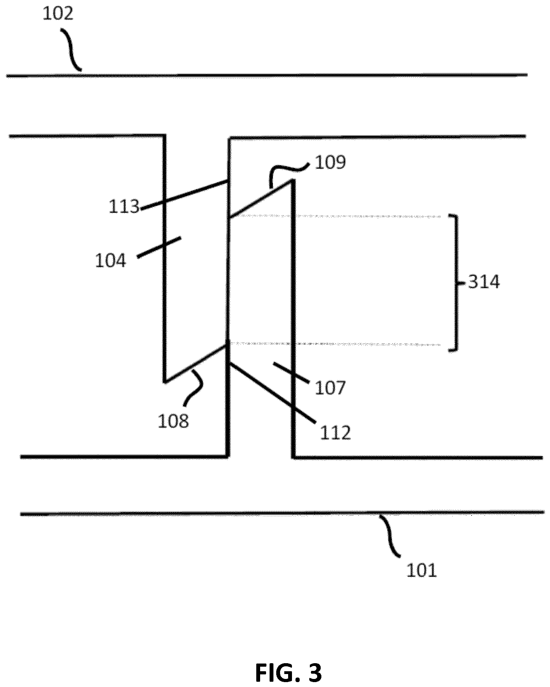

Fig. 3 illustrates a cross-sectional view of a watertight sensor assembly comprising a first member 102 and a flat lens cover 102 member, according to the embodiment illustrated in Figs. 1 and 2. The first segment 104 and the second segment 107 are adapted in shape and/or position so that, when the cover member 101 is mounted to the first member 102, the first segment 104 and the second segment 107 are positioned adjacent and in contact with each other to form a sealing region between the first member 102 and the cover member 101 based on a tight fit in the contact area or overlap 314 between the first segment 104 and the second segment 107. Hence, a watertight sealing is formed by a tight fit of the two contacting surfaces 112, 113 of respectively the first segment 104 and the second segment 107 whenever the sensor assembly 100 is brought into a closed configuration. A peripheral further portion 110 forms an outer rim of the cover member 101. It may form, when the assembly is in a closed configuration, the outer surface 106, together with the further portion 105 of the first segment. It may form together with the further portion 105 of the first segment 104 an entirely closed outer boundary 106 of the sensor assembly 100. These portions also may be adapted for being secured to each other by means of a threading or snapping mechanism.

It is an advantage of the tight fit between at least a portion of an outer surface 112 of the first segment 104 of the first member 102 and a portion of an inner surface 113 of the second segment 107 of the cover member 101 that a watertight seal is formed which protects the inner sensor as well as its connected carrier from moisture, dust, and against any mechanical ingress of foreign objects, e.g. tools or fingers, that may lead to hazards for the user, e.g. short-circuits, corrosion, electrical discharges, etc. According to embodiments of the invention, protection degrees as high as IP54, according to the IEC standard 60529, are obtained, including protection against splash water from all directions, without the need to use a gasket in between the engaging members 101, 102.

The material of the cover member 101 and the material of the first member 101 may be any suitable material as known by a person skilled in the art, as long as one of the first segment 104 and the second segment 107 is flexible so as to be able to engage the cover member 101 and the first member 102 and so that after engaging the cover member 101 and the first member 102 tension is created in the contact area or overlap 314 such that a tight fit is formed between the cover member 101 and the first member 102. In that way a watertight seal is obtained between the cover member 101 and the first member 102 without the need for using a gasket in between the cover member 101 and the first member 102. Flexibility of one of the segments 104, 107 also can be obtained by locally making the material more thin.

According to embodiments of the invention, the contact surface or overlap 314 between the first segment 104 and the second segment 107 can also be formed by an abutment present on the contacting surface 112, 113 of one of the first or second segment 104, 107 (not shown in the drawings).

In particular embodiments of the invention, the first member 102 and the cover member 101 may furthermore be coupled to one another by a suitable coupling means. This guarantees that the two members 101, 102 do not move relatively to each other in a closed configuration and therefore maintain an efficient sealing effect. In an embodiment of the invention according to Fig. 1 and Fig. 2 a suitable coupling means is provided by a bayonet mounting similar to what is known from camera lens mounts or CD storage barrels. This bayonet mounting comprises one or more protruding tabs 144 situated along the inner bounding surface of the peripheral segment 110 of the cover member 101 that mesh with an equal number of protruding flanges 143 distributed along the outer bounding surface of the second annular segment 105 of the first member 102 under a rotation action. Because of resistant frictional forces between the flanges 143 and the tabs 144 the coupling mechanism is a self-locking one. Furthermore, an L-shaped end 145 may be provided at one of the two outer ends of the flanges 143, whereby the vertically extending part of the L-shaped end 145 operates as a stopping means which prevents from further rotating the two members 101, 102 relatively to each other and thereby losing the meshing effect.

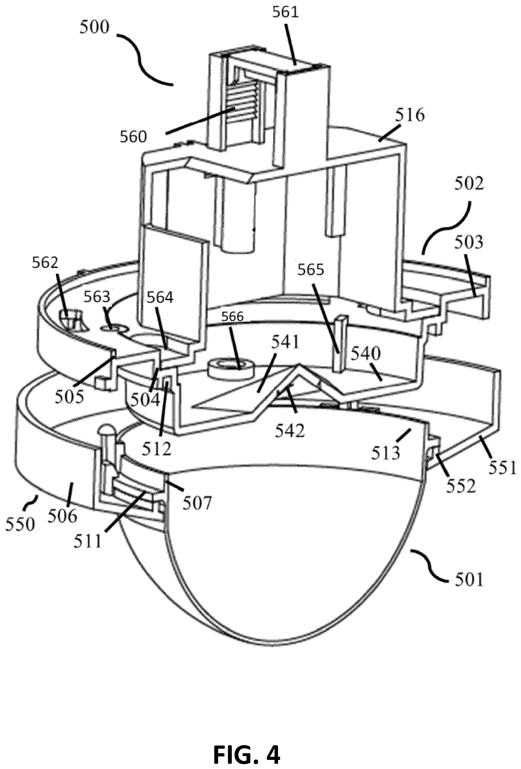

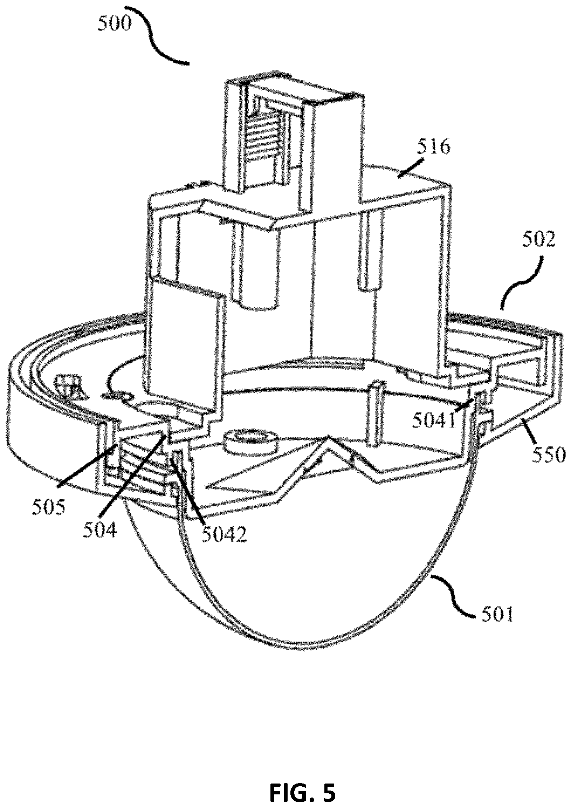

Reference is now made to Fig. 4 and Fig. 5 showing a perspective view of a hemispherical lens sensor assembly 500 according to an alternative embodiment of the invention, the sensor assembly 500 comprising two engaging members 501, 502 in an open and closed configuration, respectively. In an alternative embodiment of the invention according to Fig. 4 and Fig. 5, the sensor assembly 500 further comprises a housing 516 and a casing 550.

Compared to the embodiment illustrated in Fig. 1 and Fig. 2, i.e. the 10 m focal length flat lens sensor assembly 100, the alternative embodiment of Fig. 4 and Fig. 5 illustrates a 24 m focal length convex, e.g. hemispherical, lens sensor assembly 500. This extended collimation range of the cover member 501 acting as a lens is obtained by changing a large portion of the originally substantially flat plate defined by its substantially flat upper surface 511 into a convex structure, e.g. a dome-shaped structure, e.g. a hemisphere, leaving just a small, flat portion attached to it that forms an outer ridge 511. The cover member 501 is preferably in integral form.

An first member 502 comprises, in the present example, a ring-shaped base segment 503 with a substantially flat upper and lower surface from which depends downward an L-shaped first segment 504 the horizontal bar of which is directed toward the center of the first member 502. Furthermore, the L-shaped first segment 504 comprises two ridge-like legs 5041, 5042 projecting downward from and being attached to the lower surface of its horizontal bar. A shoulder segment 540 is attached to the first leg 5041 depending from the L-shaped first segment 504 in a slightly laterally shifted manner; it extends over the central portion of the first member 502. In contrast to the embodiment according to Fig. 1 and Fig. 2, the shoulder segment 540 of the first member 502 is oriented toward the cover member 501. This is possible since the cover member 501 comprises a dome-shaped structure which in its inner hollow region offers enough space to arrange for the shoulder segment 540. That way a more compact sensor assembly 500 is advantageously formed. At its center, the shoulder segment 540 provides a basis for an inverted pyramid structure 541 to which it is connected. The pyramid structure is provided with one or more openings 542 which may be rectangular windows, and may be adapted for mounting a sensor or sensor carrier (not shown). It is preferred and advantageous to have a four-sided pyramid structure 541 with openings 542 in each one of the four side walls and mounting a sensor or sensor carrier onto them. This enables an enlarged field of view to which the sensor assembly 500 reacts and which is desirable in view of the convex lens cover member 501 having an extended focal length of 24 m. A single sensor at only one site may not be sufficient to guarantee good concentration and detection of radiation from all directions. An additional plastic foil may be attached to the base pyramid structure 541 such that during installation the user is running no danger of experiencing electrical shocks. Moreover, adjusting screws may be provided with the sensor mount so as to enable the installer to optimize the sensor assembly 500 performance during installation. The electrical mains and other wire connections and circuitry, e.g. temperature control circuit, exhaust circuitry, pressure and humidity control circuits, and communication circuitry or wires for communicating with a remote processing unit, are protected by a housing 516 that is placed on top and secured to the upper surface of the horizontal bar of the L-shaped first segment 504 of the first member 502 such that it encloses those sensitive parts. The first member also comprises an annular segment 505 that protrudes upward and downward from the periphery of the ring-shaped base segment 503.

In embodiments of the invention according to Fig. 4 and Fig. 5, a casing 550 is also comprised by sensor assembly 500. It comprises a sloped base segment 551 with a central opening and a peripheral segment the wall of which forms an outer bounding surface 506 of the sensor assembly 500 in a closed configuration as illustrated in Fig. 5. The casing 550 further comprises an annular segment 552 projecting upward near its inner edge. If properly installed, the diameter of the central opening of the base segment 551 matches with the diameter of the dome-shaped structure of the cover member 501 within a small tolerance, such that the cover member 501 engages the casing 550 and is supported by its annular segment 552 that is contacting the outer ridge 511 in an installed configuration. Moreover, the outer bounding surface 506 of the casing 550 extends in height to the same level as the annular segment 505 of the first member 502 in such an installed and closed configuration, hence facilitating an installation of the sensor assembly 500 attached to a flat installation surface, e.g. a ceiling of a room, without causing too much strain on or deformation of the sensor assembly 500.

In embodiments of the invention according to Fig. 4 and Fig. 5, a region of tight fit for a waterproof operation of the sensor assembly 500 is formed by joining and pressing together into a closed configuration of the sensor assembly 500 the outer bounding surface 512 of the first leg 5041 depending from the L-shaped first segment 504 of the first member 502 and the inner bounding surface 513 of the cover member 501. The overhanging portion of the first member 502 formed by the second leg 5042 depending from the L-shaped first segment 504 further secures the top edge of the cover member 501 and prevents it from lateral deviations. Additionally, this overhanging portion has the advantage of providing enhanced protection against splash water close to the region of tight fit.

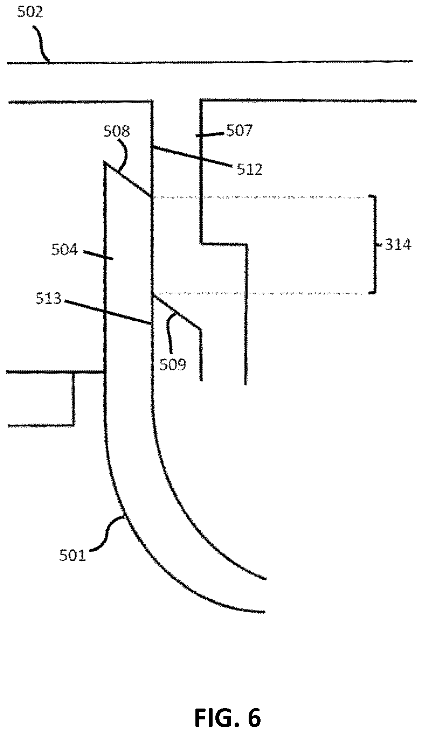

The tight fit of the sensor assembly 500 illustrated in Fig. 4 and Fig. 5 is in detail illustrated in Fig. 6. A watertight sealing is formed by a region of overlap 314 of tight fit of portions of the two contacting surfaces 512, 513 if the sensor assembly 500 is being brought into a closed configuration. It is also apparent from Fig. 6 that the edges 508, 509 of the first segment 504 of the first member 502 and the second segment 507 of the cover member 501, respectively, typically show a sloping feature, e.g. exhibit a bevel or chamfer, which may be a present feature of the integrally formed member 501, 502 or may be cut thereof. Typical slope angles of the edges are ranging from 15° to 50°, preferably in the range from 25° to 45°. It is an advantage of embodiments of the invention that the edges 508, 509 of the first segment 504 of the first member 502 and the second segment 507 of the cover member 501, respectively, are realized as sloping edges since this technical features facilitates the assembly of the two members 501, 502 by pressure induced means or by mechanical fastening means thereby increasing the contact between the segments without causing damage to or putting too much strain on the first segment 504 of the first member 502 and the second segment 507 of the cover member 501.

In a preferred embodiment of the invention, the cover member 501 is made from a transparent material, e.g. a transparent polymer plastic, such that the sensor, e.g. a light-sensitive semiconductor device, is experiencing an increased interaction with an environmental variable, e.g. a radiation signal, e.g. visible or infrared light. Furthermore, the cover member 501 may, in such a preferred embodiment, comprise a modified portion so as to form and act as a lens that concentrates a radiation signal onto the sensor. This may be achieved by changing the material composition locally to be optically more compact, by changing the shape of at least a portion of the cover member 501 into a curved surface, by applying a refracting thin film to one or more bounding or intermediate surfaces of the cover member 501, by patterning one or more bounding or intermediate surfaces of the cover member, e.g. patterning of a flat surface to act as a Fresnel lens, by applying a diffractive optical element or hologram to one or more flat or curved surfaces of the cover member 501, etc. As a result the cover member 501 may be configured as a flat lens, a hemispherical lens, an aspheric lens, etc. In an alternative embodiment of the invention, the cover member 501 may still be transparent, but does not have to function as a lens. In this case, if a lens is still required for an appropriate use of the sensor device, a separate lens cap may be provided and is attached to the sensor assembly 500.

In general, and as already described above, the material of the cover member 501 and the material of the first member 502 may be any suitable material as known by a person skilled in the art, as long as at least one of the first segment 504 and the second segment 507 is flexible so as to be able to engage the cover member 501 and the first member 502 and so that after engaging the cover member 501 and the first member 502 tension is created in the contact area or overlap 314 such that a tight fit is formed between the cover member 501 and the first member 502. In that way a watertight seal is obtained between the cover member 501 and the first member 502 without the need for using a gasket in between the cover member 501 and the first member 502.

In particular embodiments of the invention, the first member 502 and the casing 550 may furthermore be coupled to one another by a suitable coupling means. This guarantees that the first member 502, the casing 550, and the cover members 501 supported by it do not move relatively to each other in a closed configuration and therefore maintain an efficient sealing effect. In an embodiment of the invention according to Fig. 4 and Fig. 5 a suitable coupling means is provided by a bayonet mounting. This bayonet mounting comprises one or more protruding tabs situated along the inner bounding surface of the peripheral segment of the casing 550 that mesh with an equal number of protruding flanges distributed along the outer bounding surface of the peripheral annular segment 505 of the first member 502 under a rotation action. Because of resistant frictional forces between the flanges and the tabs the coupling mechanism is a self-locking one. Furthermore, an L-shaped end may be provided at one of the two outer ends of the flanges, whereby the vertically extending part of the L-shaped end operates as a stopping means which prevents from further rotating the two parts 550, 502 relatively too each other and thereby losing the meshing effect.

For the sake of completeness also optional components cable fixation parts 560, 561 are shown as well as a mounting hole 562, a positioning hole 563, a counter shape 564 for screws, an element that guarantees appropriate position of a PCB used 565 and an opening for allowing access to the device 566.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A sensor assembly (100, 500), comprising a first member (102, 502), at least one sensor positioned in or on the first member (102, 502), and a cover member (101, 501) for covering the at least one sensor,
the first member (102, 502) comprising at least a base portion (103, 503) and a first segment (104, 504) forming an encircling wall for the at least one sensor, and the cover member (101, 501) comprising at least a top portion (111, 551) and a second segment (107, 507),
the first segment (104, 504) comprising a bounding surface (112, 512) and the second segment (107, 507) comprising a further bounding surface (113, 513),
wherein the first segment (104, 504) and the second segment (107, 507) are adapted in shape and/or position so that, when the cover member (101, 501) is mounted to the first member (102, 502), the first segment (104, 504) and the second segment (107, 507) are positioned adjacent and in contact with each other in a contact area (314),
wherein at least one of the first segment (104, 504) and second segment (107, 507) are flexible so that tension is created to form a sealing region between the first member (102, 502) and the cover member (101, 501) based on a tight fit of the contacting bounding surfaces (112, 113; 512, 513) in the contact area (314) between the first segment (104, 504) and the second segment (107, 507), **characterized in that** the bounding surfaces of the first segment (104, 504) and second segment (108, 507) extend substantially perpendicular to the base portion (103, 503) and from the top portion (111, 511).

2. A sensor assembly (100, 500) according to claim 1 wherein the contact area (314) between the first segment (104, 504) and the second segment (107, 507) extends along an inner side of the encircling wall facing towards the sensor, or the opposite side of the inner side of the encircling wall facing the sensor.

3. A sensor assembly (100, 500) according to any of the previous claims, wherein the sealing region between the first member (102, 502) and the cover member (101, 501) is a gasket-free sealing region.

4. A sensor assembly (100, 500) according to any of the previous claims, wherein at least one of the segments (104, 504; 107, 507) which are in contact with each other so as to form the region of tight fit in a closed configuration of the sensor assembly (100, 500) comprises at least a partially sloped edge (108, 109; 508, 509).

5. A sensor assembly (100, 500) according to any of the previous claims, wherein the first segment (104, 504) and the second segment (107, 507) are positioned slightly overlapping so as to increase the contact when the first segment (104, 504) and the second segment (107, 507) are positioned adjacent each other when mounting the cover member (101, 501) on the first member (102, 502).

6. A sensor assembly (100, 500) according to any of the previous claims, wherein the cover member (101, 501) acts as a lens, for example one of flat lens, a Fresnel lens, a convex lens or a hemispherical lens.

7. A sensor assembly (100, 500) according to any of the previous claims, in which the sensor assembly (100, 500) further comprises a casing member (550) that supports the cover member (101, 501) in at least a closed configuration of the sensor assembly (100, 500).

8. A sensor assembly (100, 500) according to any of the previous claims, the sensor assembly (100, 500) further comprising a housing member (116, 516) adapted for being attached to the side of the first member (104, 504) opposite to the side that is facing the cover member (101, 501) in a closed configuration of the sensor assembly (100, 500).

9. A sensor assembly (100, 500) according to claim 8, the sensor assembly (100, 500) further comprising wire connections to the sensor and in which the housing member (116, 516) is configured in such a way that it encloses and protects at least these wire connections in a closed configuration of the sensor assembly (100, 500), optionally wherein the sensor assembly (100, 500) is wall-mounted during use of the sensor assembly (100, 500) such that the housing member (116, 516) is not visible to the user.

10. A sensor assembly (100, 500) according to any of the previous claims, in which one or more members are integrally made from polymer plastics.

11. A sensor assembly (100, 500) according to any of the previous claims, wherein the sensor assembly (100, 500) further comprises adjusting means for adjusting the sensor orientation during installation.

12. A sensor assembly (100, 500) according to any of the previous claims, wherein the sensor assembly(100, 500) further comprises a protecting foil which covers the sensor and which prevents direct contacting of the sensor from the side of the first member (104, 504) which is facing the cover member (101, 501) in a closed configuration of the sensor assembly (100, 500).

13. A sensor assembly (100, 500) according to any of the previous claims, wherein the sensor assembly (100, 500) further comprises locking means for holding two or more members of the sensor assembly (100, 500) in a fixed position relative to each other in a closed configuration of the sensor assembly (100, 500), such that the tight fit is permanently maintained in that closed configuration of the sensor assembly (100, 500), optionally wherein the locking means comprise at least a bayonet mount (143, 144, 145).

14. A sensor assembly (100, 500) according to any of the previous claims, wherein the suitable coupling means for coupling the at least one sensor to the first member (104, 504) comprises mounting the at least one sensor onto a sensor carrier.

15. A sensor assembly (100, 500) according to any of the previous claims, wherein the sensor assembly (100, 500) comprises a coupling means for coupling the at least one sensor to the first member (104, 504) via a sensor carrier.

## Patentansprüche

1. Sensoranordnung (100, 500), die ein erstes Element (102, 502), wenigstens einen Sensor, der in oder auf dem ersten Element (102, 502) positioniert ist, und ein Abdeckungselement (101, 501) zum Abdecken des wenigstens einen Sensors umfasst,
wobei das erste Element (102, 502) wenigstens einen Basisabschnitt (103, 503) und ein erstes Segment (104, 504) umfasst, die eine umschließende Wand für den wenigstens einen Sensor ausbilden, und das Abdeckungselement (101, 501) wenigstens einen oberen Abschnitt (111, 551) und ein zweites Segment (107, 507) umfasst,
wobei das erste Segment (104, 504) eine Grenzoberfläche (112, 512) umfasst und das zweite Segment (107, 507) eine weitere Grenzoberfläche (113, 513) umfasst,
wobei das erste Segment (104, 504) und das zweite Segment (107, 507) in einer Form und/oder einer Position angepasst sind, sodass, wenn das Abdeckungselement (101, 501) an dem ersten Element (102, 502) befestigt ist, das erste Segment (104, 504) und das zweite Segment (107, 507) angrenzend und in Berührung miteinander in einem Berührungsgebiet (314) positioniert sind,
wobei das erste Segment (104, 504) und/oder das zweite Segments (107, 507) flexibel ist, sodass eine Spannung erzeugt wird, um einen Abdichtungsbereich zwischen dem ersten Element (102, 502) und dem Abdeckungselement (101, 501) basierend auf einer Presspassung der berührenden Grenzoberflächen (112, 113; 512, 513) in dem Berührungsgebiet (314) zwischen dem ersten Segment (104, 504) und dem zweiten Segment (107, 507) auszubilden, **dadurch gekennzeichnet, dass** die Grenzoberflächen des ersten Segments (104, 504) und des zweiten Segments (108, 507) sich im Wesentlichen senkrecht zu dem Basisabschnitt (103, 503) und von dem oberen Abschnitt (111, 511) erstrecken.

2. Sensoranordnung (100, 500) nach Anspruch 1, wobei sich das Berührungsgebiet (314) zwischen dem ersten Segment (104, 504) und dem zweiten Segment (107, 507) entlang einer inneren Seite der umschließenden Wand, die dem Sensor zugewandt ist, oder der gegenüberliegenden Seite der inneren Seite der umschließenden Wand, die dem Sensor zugewandt ist, erstreckt.

3. Sensoranordnung (100, 500) nach einem der vorhergehenden Ansprüche, wobei der Abdichtungsbereich zwischen dem ersten Element (102, 502) und dem Abdeckungselement (101, 501) ein dichtungsfreier Abdichtungsbereich ist.

4. Sensoranordnung (100, 500) nach einem der vorhergehenden Ansprüche, wobei wenigstens eines der Segmente (104, 504; 107, 507), die miteinander in Berührung stehen, um den Bereich mit Presspassung in einer geschlossenen Konfiguration der Sensoranordnung (100, 500) auszubilden, wenigstens einen teilweise geneigten Rand (108, 109; 508, 509) umfasst.

5. Sensoranordnung (100, 500) nach einem der vorhergehenden Ansprüche, wobei das erste Segment (104, 504) und das zweite Segment (107, 507) leicht überlappend positioniert sind, um die Berührung, wenn das erste Segment (104, 504) und das zweite Segment (107, 507) angrenzend aneinander positioniert sind, wenn das Abdeckungselement (101, 501) auf dem ersten Element (102, 502) befestigt wird, zu erhöhen.

6. Sensoranordnung (100, 500) nach einem der vorhergehenden Ansprüche, wobei das Abdeckungselement (101, 501) als eine Linse wirkt, beispielsweise eine flache Linse, eine Fresnellinse, eine konvexe Linse oder eine halbkugelförmige Linse.

7. Sensoranordnung (100, 500) nach einem der vorhergehenden Ansprüche, wobei die Sensoranordnung (100, 500) ferner ein Mantelelement (550) umfasst, das das Abdeckungselement (101, 501) in wenigstens einer geschlossenen Konfiguration der Sensoranordnung (100, 500) stützt.

8. Sensoranordnung (100, 500) nach einem der vorhergehenden Ansprüche, wobei die Sensoranordnung (100, 500) ferner ein Gehäuseelement (116, 516) umfasst, das zum Anbringen an der Seite des ersten Elements (104, 504) gegenüber der Seite, die dem Abdeckungselement (101, 501) in einer geschlossenen Konfiguration der Sensoranordnung (100, 500) zugewandt ist, angepasst ist.

9. Sensoranordnung (100, 500) nach Anspruch 8, wobei die Sensoranordnung (100, 500) ferner Drahtverbindungen zu dem Sensor umfasst und wobei das Gehäuseelement (116, 516) in einer solchen Art konfiguriert ist, dass es wenigstens diese Drahtverbindungen in einer geschlossenen Konfiguration der Sensoranordnung (100, 500) einschließt und schützt, optional wobei die Sensoranordnung (100, 500) während einer Verwendung der Sensoranordnung (100, 500) derart an der Wand befestigt ist, dass das Gehäuseelement (116, 516) für den Benutzer nicht sichtbar ist.

10. Sensoranordnung (100, 500) nach einem der vorhergehenden Ansprüche, wobei das eine oder die mehreren Elemente einstückig aus Polymerkunststoffen hergestellt sind.

11. Sensoranordnung (100, 500) nach einem der vorhergehenden Ansprüche, wobei die Sensoranordnung (100, 500) ferner Einstellmittel zum Einstellen der Sensorausrichtung während einer Installation umfasst.

12. Sensoranordnung (100, 500) nach einem der vorhergehenden Ansprüche, wobei die Sensoranordnung (100, 500) ferner eine Schutzfolie umfasst, die den Sensor bedeckt und die ein direktes Berühren des Sensors von der Seite des ersten Elements (104, 504), die in einer geschlossenen Konfiguration der Sensoranordnung (100, 500) dem Abdeckungselement (101, 501) zugewandt ist, verhindert.

13. Sensoranordnung (100, 500) nach einem der vorhergehenden Ansprüche, wobei die Sensoranordnung (100, 500) ferner Verriegelungsmittel zum Halten von zwei oder mehr Elementen der Sensoranordnung (100, 500) in einer festen Position relativ zueinander in einer geschlossenen Konfiguration der Sensoranordnung (100, 500) derart umfasst, dass die Presspassung in dieser geschlossenen Konfiguration der Sensoranordnung (100, 500) dauerhaft aufrechterhalten wird, optional wobei die Verriegelungsmittel wenigstens eine Bajonettbefestigung (143, 144, 145) umfassen.

14. Sensoranordnung (100, 500) nach einem der vorhergehenden Ansprüche, wobei das geeignete Kopplungsmittel zum Koppeln des wenigstens einen Sensors an das erste Element (104, 504) das Befestigen des wenigstens einen Sensors auf einem Sensorträger umfasst.

15. Sensoranordnung (100, 500) nach einem der vorhergehenden Ansprüche, wobei die Sensoranordnung (100, 500) ein Kopplungsmittel zum Koppeln des wenigstens einen Sensors an das erste Element (104, 504) über einen Sensorträger umfasst.

## Revendications

1. Ensemble de capteur (100, 500), comprenant un premier élément (102, 502), au moins un capteur positionné dans ou sur le premier élément (102, 502), et un élément recouvrant (101, 501) pour recouvrir l'au moins un capteur,
le premier élément (102, 502) comprenant au moins une partie de base (103, 503) et un premier segment (104, 504) formant une paroi d'encerclement pour l'au moins un capteur, et l'élément recouvrant (101, 501) comprenant au moins une partie supérieure (111, 551) et un second segment (107, 507),
le premier segment (104, 504) comprenant une surface de délimitation (112, 512) et le second segment (107, 507) comprenant une autre surface de délimitation (113, 513),
dans lequel le premier segment (104, 504) et le second segment (107, 507) ayant une forme et/ou une position adaptées de telle sorte que, lorsque l'élément recouvrant (101, 501) est fixé sur le premier élément (102, 502), le premier segment (104, 504) et le second segment (107, 507) sont positionnés adjacents et en contact l'un avec l'autre dans une zone de contact (314),
le premier segment (104, 504) et/ou le second segment (107, 507) étant flexibles de telle sorte qu'une tension est créée pour former une région d'étanchéité entre le premier élément (102, 502) et l'élément recouvrant (101, 501) sur la base d'un ajustement serré des surfaces de délimitation (112, 113 ; 512, 513) en contact dans la zone de contact (314) entre le premier segment (104, 504) et le second segment (107, 507), **caractérisé en ce que** les surfaces de délimitation du premier segment (104, 504) et du second segment (108, 507) s'étendent sensiblement perpendiculairement à la partie de base (103, 503) et à partir de la partie supérieure (111, 511).

2. Ensemble de capteur (100, 500) selon la revendication 1, la zone de contact (314) entre le premier segment (104, 504) et le second segment (107, 507) s'étendant le long d'un côté intérieur de la paroi d'encerclement tournée vers le capteur, ou du côté opposé du côté intérieur de la paroi d'encerclement faisant face au capteur.

3. Ensemble de capteur (100, 500) selon l'une quelconque des revendications précédentes, la région d'étanchéité entre le premier élément (102, 502) et l'élément recouvrant (101, 501) étant une région d'étanchéité sans joint.

4. Ensemble de capteur (100, 500) selon l'une quelconque des revendications précédentes, au moins l'un des segments (104, 504 ; 107, 507) qui sont en contact l'un avec l'autre de manière à former la région d'ajustement serré dans une configuration fermée de l'ensemble de capteur (100, 500) comprenant au moins un bord partiellement incliné (108, 109 ; 508, 509).

5. Ensemble de capteur (100, 500) selon l'une quelconque des revendications précédentes, le premier segment (104, 504) et le second segment (107, 507) étant positionnés légèrement en chevauchement de manière à augmenter le contact lorsque le premier segment (104, 504) et le second segment (107, 507) sont positionnés l'un à côté de l'autre lorsque l'élément recouvrant (101, 501) est fixé sur le premier élément (102, 502).

6. Ensemble de capteur (100, 500) selon l'une quelconque des revendications précédentes, l'élément recouvrant (101, 501) agissant comme une lentille, par exemple une lentille plate, une lentille de Fresnel, une lentille convexe ou une lentille hémisphérique.

7. Ensemble de capteur (100, 500) selon l'une quelconque des revendications précédentes, l'ensemble de capteur (100, 500) comprenant en outre un élément de boîtier (550) qui supporte l'élément recouvrant (101, 501) dans au moins une configuration fermée de l'ensemble de capteur (100, 500).

8. Ensemble de capteur (100, 500) selon l'une quelconque des revendications précédentes, l'ensemble de capteur (100, 500) comprenant en outre un élément de boîtier (116, 516) adapté pour être fixé sur le côté du premier élément (104, 504) opposé au côté qui fait face à l'élément recouvrant (101, 501) dans une configuration fermée de l'ensemble de capteur (100, 500).

9. Ensemble de capteur (100, 500) selon la revendication 8, l'ensemble de capteur (100, 500) comprenant en outre des connexions pfilaires au capteur et l'élément de boîtier (116, 516) étant conçu de telle manière qu'il enferme et protège au moins ces connexions filaires dans une configuration fermée de l'ensemble de capteur (100, 500), éventuellement l'ensemble de capteur (100, 500) étant fixé au mur pendant l'utilisation de l'ensemble de capteur (100, 500) de telle sorte que l'élément de boîtier (116, 516) n'est pas visible par l'utilisateur.

10. Ensemble de capteur (100, 500) selon l'une quelconque des revendications précédentes, un ou plusieurs éléments étant intégralement fabriqués à partir de plastiques polymères.

11. Ensemble de capteur (100, 500) selon l'une quelconque des revendications précédentes, l'ensemble de capteur (100, 500) comprenant en outre des moyens de réglage pour régler l'orientation du capteur pendant l'installation.

12. Ensemble de capteur (100, 500) selon l'une quelconque des revendications précédentes, l'ensemble de capteur (100, 500) comprenant en outre une feuille de protection qui recouvre le capteur et qui empêche le contact direct du capteur depuis le côté du premier élément (104, 504) qui fait face à l'élément recouvrant (101, 501) dans une configuration fermée de l'ensemble de capteur (100, 500).

13. Ensemble de capteur (100, 500) selon l'une quelconque des revendications précédentes, l'ensemble de capteur (100, 500) comprenant en outre un moyen de verrouillage pour maintenir au moins deux éléments de l'ensemble de capteur (100, 500) en une position fixe l'un par rapport à l'autre dans une configuration fermée de l'ensemble de capteur (100, 500), de telle sorte que l'ajustement serré est maintenu en permanence dans cette configuration fermée de l'ensemble de capteur (100, 500), éventuellement les moyens de verrouillage comprenant au moins une monture à baïonnette (143, 144, 145).

14. Ensemble de capteur (100, 500) selon l'une quelconque des revendications précédentes, le moyen de couplage approprié pour coupler l'au moins un capteur au premier élément (104, 504) comprenant le fait de fixer l'au moins un capteur sur un support de capteur.

15. Ensemble de capteur (100, 500) selon l'une quelconque des revendications précédentes, l'ensemble de capteur (100, 500) comprenant un moyen de couplage pour coupler l'au moins un capteur au premier élément (104, 504) par le biais d'un support de capteur.
